# EUROPÄISCHE PATENTSCHRIFT

(11) **EP 2 911 821 B1**
(45) Veröffentlichungstag und Bekanntmachung des Hinweises auf die Patenterteilung: **09.03.2016**
(21) Anmeldenummer: 12813757.7
(22) Anmeldetag: 13.12.2012
(51) Int. Cl.: B23K 11/30

(54) **VORRICHTUNG ZUM BEFÜLLEN VON MAGAZINEN FÜR ELEKTRODENKAPPEN**
DEVICE FOR FILLING MAGAZINES WITH ELECTRODE CAPS
DISPOSITIF POUR LE REMPLISSAGE D'UN CHARGEUR AVEC DES EMBOUTS D'ELECTRODE

(30) Priorität: 24.10.2012 DE 102012020854
(43) Veröffentlichungstag der Anmeldung: 02.09.2015
(73) Patentinhaber: Bräuer Systemtechnik GmbH, 09456 Mildenau (DE)
(72) Erfinder: BRÄUER, Andreas, 09456 Annaberg-Buchholz (DE); BEYER, Markus, 09481 Elterlein OT Schwarzbach (DE); SEIPT, René, 09456 Annaberg-Buchholz (DE)
(74) Vertreter: Köhler, Tobias
(86) Internationale Anmeldenummer: PCT/EP2012/005140
(87) Internationale Veröffentlichungsnummer: WO 2014/063721

(56) Entgegenhaltungen:
- DE-A1-102005 038 189
- DE-B3-102007 041 505
- US-A- 3 944 062

## Beschreibung

Die Erfindung betrifft eine Vorrichtung zum Drehen, Positionieren und Einbringen von Elektrodenkappen für Schweißelektroden in ein dafür vorgesehenes Magazin für Elektrodenkappen. Solche Magazine für Elektrodenkappen werden für die Bestückung von Schweißrobotern verwendet.

Insbesondere bei der Karosserieherstellung in automatisierten Fertigungsstraßen der Automobifindustrie wird zum Verbinden von Metallblechen häufig das Punkt-Schweißen eingesetzt. Um Karosserieblechteile miteinander zu verbinden, werden hier üblicherweise Schweißroboter eingesetzt. Diese Schweißroboter sind mit Schweißzangen ausgestattet, deren Zangenarme mit je einer Punkt-SchweißElektrode, den sogenannten Elektrodenkappen, ausgerüstet sind. Diese Schweißzangen werden an die miteinander zu verschweißenden, positionierten Bleche herangeführt. Die genaue Positionierung der Schweißzange zu den zu verschweißenden Blechen erfolgt automatisiert und computergestützt. In solch einer automatisierten Fertigungsstraße erfolgen die Schweißvorgänge in möglichst schneller Taktung und unterbrechungsfrei. Hierdurch unterliegen die Elektrodenkappen einem besonders hohen Verschleiß, da die Kontaktflächen der Elektrodenkappen in Eingriff mit den jeweils zu verschweißenden Karosserieblechteilen treten.

Beim Schweißvorgang fließt Strom zwischen den Elektrodenkappen durch die zu verschweißenden und aneinander anliegenden Karosserieblechteile. Dabei tritt eine Veränderung an den Kontaktflächen der Elektrodenkappen auf.
Häufig bilden sich am Rand der Kontaktflächen Abbrandwülste, welche durch eine Vergrößerung der Kontaktfläche eine Veränderung der Schweißbedingungen bewirken.

Um dieser Veränderung nicht durch ein unökonomisches Erhöhen der Stromstärke begegnen zu müssen, werden die Elektrodenkappen regelmäßig und in Abhängigkeit ihrer Belastung und daraus resultierender Verformung durch Fräsen nachbearbeitet.

Nach einer bestimmten Anzahl durchgeführter Nachbearbeitungen ist ein Materialabtrag der Elektrodenkappe in solch einem Maße erfolgt, dass diese ausgetauscht werden muss. Dazu werden die verschlissenen Elektrodenkappen von den Schweißelektrodenschäften abgezogen. Zum Bestücken der Schweißelektrodenschäfte mit neuen unverbrauchten Elektrodenkappen werden üblicherweise Magazine in einfacher Ausführungsform verwendet.

Diese Magazine sind so angeordnet, dass die Schweißzangen durch Schließen in einer definierten Position neue Elektrodenkappen aufnehmen und diese in ihrer Lage auf dem Schweißelektrodenschaft durch Andrücken der Schweißzangenarme gegeneinander befestigen.

Da die Magazine in einer definierten Lage angeordnet sein müssen, um von der Schweißzange angefahren werden zu können, ist es erforderlich, diese Magazine in ihrer Position zu belassen und die Magazine am Einsatzort von Hand nachzufüllen (siehe DE10200704/505).

Da sich keine Personen in den Aktionsbereichen der aktiven Roboter befinden dürfen und es daher aus sicherheitstechnischen Gründen nicht möglich ist im laufenden Betrieb dieses Nachfüllen vorzunehmen, erfordert dies in der Regel eine Prozessunterbrechung.
Um diesem Nachteil zu begegnen, wurden Wechselmagazine entwickelt.

So beschreibt die DE 199 05 477 ein Magazin für Elektrodenkappen von Schweißelektroden, insbesondere für Schweißzangen an Schweißrobotern. Diese Patentschrift beschreibt, die zu bevorratenden Elektrodenkappen aufgereiht in, ihrer Form entsprechenden, Kappenführungen in einem sogenannten Magazin zu lagern. Die Kappenführungen sind parallel zur Längsachse des Magazins und lageidentisch dazu auch in der Entnahmeöffnung ausgeführt.

Dabei ist die Entnahmeöffnung soweit in Zugriffrichtung der Schweißzange geöffnet, dass jeweils eine Schweißkappe mit ihrer in Richtung des Zugriffs positionierten Öffnung angeordnet ist und in ihrem gesamten Zugriff frei liegt.

Hier wird jedoch der Nachteil der Prozessunterbrechung nicht behoben, da nach Montage eines neuen Magazins ebenfalls eine neue Programmierung der Koordinaten der Schweißzangenbewegung erfolgen muss.

Die Magazine gemäß des Standes der Technik müssen in gefülltem Zustand vorgehalten werden, um ein schnelles Wechseln in der Roboterzelle realisieren zu können. Dazu ist es üblich, diese Magazine von Hand zu befüllen.

Der Erfindung liegt die Aufgabe zugrunde, eine Vorrichtung zum Drehen, Positionieren und Einbringen von Elektrodenkappen von Schweißelektroden in ein dafür vorgesehenes Magazin für Elektrodenkappen vorzuschlagen, mit welcher die Schwierigkeiten bisher bekannter Lösungen möglichst vermieden werden sollen und insbesondere die Prozesssicherheit gewährleistet wird.

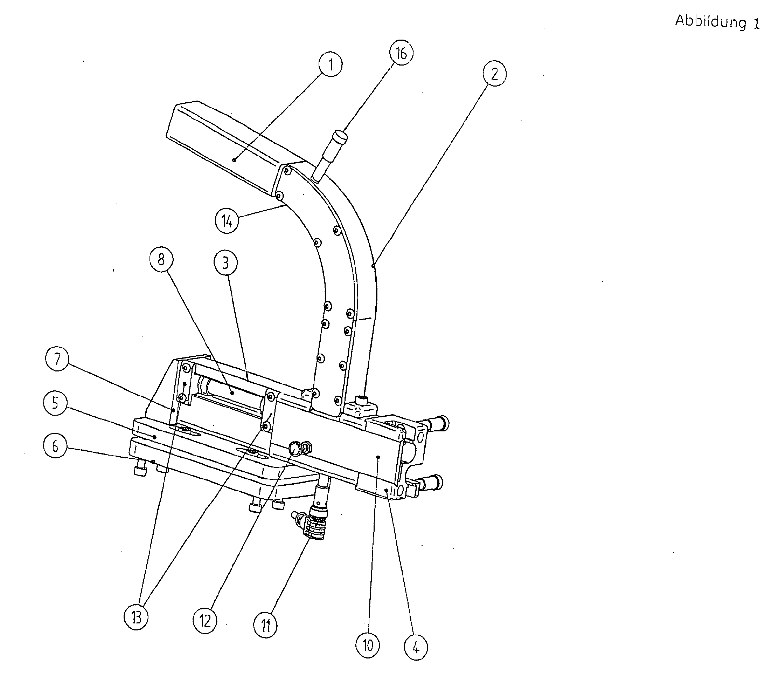

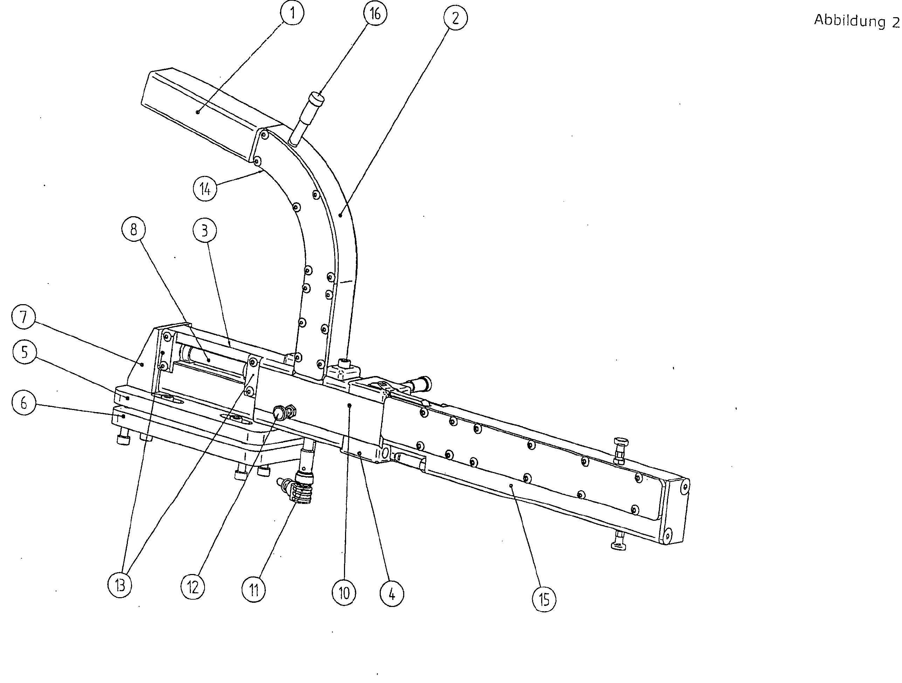

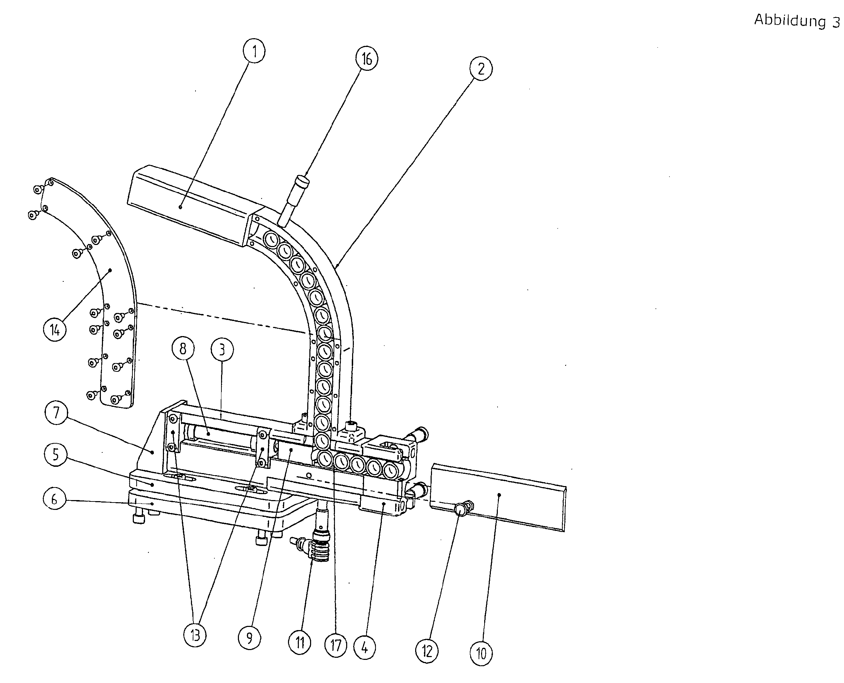

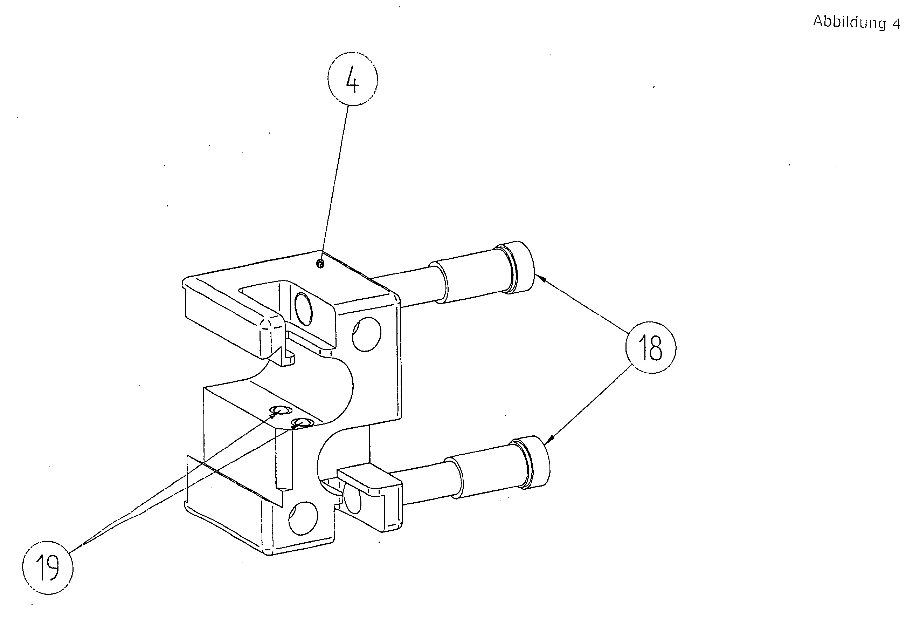

Erfindungsgemäß wird diese Aufgabe durch eine Vorrichtung gemäß der Patentansprüche 1 bis 15 gelöst.
Nachfolgend soll diese Vorrichtung anhand der Abbildungen 1 bis 4 und dem Ausführungsbeispiel näher erläutert werden.

Dabei zeigt Abbildung 1 die erfindungsgemäße Vorrichtung 3 in entkoppeltem Zustand ohne Magazin 15, Abbildung 2 stellt die erfindungsgemäße Vorrichtung 3 in gekoppeltem Zustand mit Magazin 15 dar. In Abbildung 3 ist die erfindungsgemäße Vorrichtung 3 in entkoppeltem Zustand ohne Magazin 15 in Explosionsdarstellung und in Abbildung 4 ist der Magazinanschluss 14 rückseitig gezeigt.

Die erfindungsgemäße Vorrichtung 3 besteht aus einem Elektrodenkappendrehkanal 1, welcher an einem Ende mit einem Wendelförderer verbunden ist.
Durch den Wendelförderer werden die Elektrodenkappen vorpositioniert und gefördert. Die Elektrodenkappen stehen am Ende des Wendelförderers auf ihrer mit einer Bohrung versehenen Stirnseite.

Aus dieser Position werden die Elektrodenkappen in definierter Lage an den Elektrodenkappendrehkanal 1 übergeben.
Dieser Elektrodenkappendrehkanal 1 ist dabei so ausgeführt, dass die Elektrodenkappen um 90° ihrer Z-Achse gedreht werden.
Der Elektrodenkappendrehkanal 1 ist dabei vorzugsweise fest mit dem Wendelförderer verbunden, um die Vibrationen des Wendelförderers auf den Elektrodenkappendrehkanal 1 zu übertragen und die Elektrodenkappen besser fördern zu können.

Mit seinem anderen Ende ist der Elektrodenkappendrehkanal 1 gegenüber des oberen Endes des Führungsschachtes 2 angeordnet.
Der Elektrodenkappendrehkanal 1 ist dabei so zu dem Führungsschacht 2 angeordnet, dass die Vibrationen des Wendelförderers nicht auf das übrige System übertragen werden und die Öffnungen des Elektrodenkappendrehkanals 1 und des Führungsschachtes 2 sich so gegenüber stehen, dass eine Übergabe der Elektrodenkappen sicher erfolgen kann.

Dabei ist der Abstand zwischen Elektrodenkappendrehkanal 1 und Führungsschacht 2 so ausgewählt, dass sich diese Baugruppen auch bei zugeschaltetem Wendelförderer nicht berühren, jedoch die Spaltbreite so gering wie möglich gehalten wird.

Gleichzeitig wird der Führungsschacht 2 als Puffer für das zu füllende Magazin 15 eingesetzt, damit stets eine bestimmte Anzahl von Elektrodenkappen zum Befüllen eines Magazins 15 zur Verfügung steht.
Der Führungsschacht 2 ist frontseitig mit einer transparenten Schachtsichtscheibe 14, vorzugsweise einer Acrylglasscheibe, abgedeckt.

Im oberen Bereich des Führungsschachtes 2 ist ein Sensor 16 angeordnet. Dieser Sensor 16 dient dazu, den Füllstand der Elektrodenkappen im Führungsschacht 2 zu überwachen. Sobald der gewünschte Mindestfüllstand unterschritten wird und somit der Sensor 16 kein Signal mehr erhält, wird der Wendelförderer eingeschaltet und es werden dem Führungsschacht 2 weitere Elektrodenkappen zugeführt.
Vorzugsweise ist dieser Sensor 16 als induktiver Sensor ausgeführt.

Dieser Führungsschacht 2 ist an seinem unteren Ende mit der Magazinbefülleinheit 3 verbunden. Diese Magazinbefülleinheit 3 wird somit von oben durch den Führungsschacht 2 mit Elektrodenkappen befüllt.

Die Magazinbefülleinheit 3 weist an einen Ende einen Magazinanschluss 4 auf.

Die Aufnahme des Magazinanschlusses entspricht in ihrer konstruktiven Ausführung der Aufnahme, mit welcher das Magazin 15 maschinenseitig an einem Kappenwechselgerätes fixiert wird und sichert somit eine feste Verbindung zwischen dem zu befüllenden Magazin 15 und dem Magazinanschluss 4.

Im Magazinanschluss 4 sind zwei Rasthebelsensoren 18 angeordnet, welche den korrekten Sitz des Magazins 15 im Magazinanschluss 4 detektieren. Weiterhin sind im Kanal des Magazinanschlusses 4 zwei Kugeldruckstücke 19 in Arbeitsrichtung nacheinander angeordnet, die ein unbeabsichtigtes Herausfallen von Elektrodenkappen aus dem Magazinanschluss 4 verhindern.

Durch einen der Elektrodenkappenform entsprechenden Kanal im Führungsschacht 2 werden die Elektrodenkappen durch den Magazinanschluss 4 in das zu befüllende Magazin 15 befördert.

In der Magazinbefülleinheit 3 ist unterhalb des Führungsschachtes 2 ein Sensor 11 angeordnet, welcher die aus dem Führungsschacht 2 fallenden Elektrodenkappen erkennt.
Auf der gegenüberliegenden Seite des Magazinanschlusses 4 ist ein Zylinder 8, vorzugsweise ausgeführt als Pneumatikzylinder, angeordnet und in der Magazinbefülleinheit 3 mittels der Halterungen 13 befestigt.
Das mit der Kolbenstange des Zylinders 8 verbundene Druckstück 9 ist zwischen dem Zylinder 8 und der im Kanal der Magazinbefülleinheit 3 befindlichen Elektrodenkappe angeordnet. Dieses Druckstück 9 weist an der Kontaktseite mit der Elektrodenkappe eine Ausfräsung der Kappenkontur auf.

Befindet sich nun eine Elektrodenkappe vor dem Druckstück 9 in der Magazinbefülleinheit 3, wird diese von dem Sensor 11, vorzugsweise ausgeführt als induktiver Sensor, erkannt, der Zylinder 8 fährt aus und schiebt die Elektrodenkappe durch den Magazinanschluss 4 in das Magazin 15.

Die Verarbeitung der Signale und Ansteuerung der Ventile übernimmt eine Steuerung, welche vorzugsweise im Schaltkasten des Wendelförderers angeordnet ist.

In Arbeitsrichtung hinter dem Sensor 11 ist ein Kugeldruckstück 17 so angeordnet, dass die aus dem Führungsschacht 2 zugeführten Elektrodenkappen die Position und somit den Detektionsbereich des induktiven Sensors 11 nicht unbeabsichtigt verlassen.
Die frontseitige Abdeckung der Magazinbefülleinheit 3 ist mittels einer transparenten Abdeckung 10 realisiert, welche vorzugsweise aus Acrylglas besteht.

In einer besonderen Ausgestaltung der erfindungsgemäßen Lösung ist diese Abdeckung als Wartungsöffnung ausgeführt.

Hierzu kann diese Abdeckung 10 mittels einer Schwalbenschwanzführung eingesetzt und entnommen werden. Zum Arretieren der Abdeckung 10 wird ein Raststück 12 verwendet.
Durch diese Lösungen ist die Abdeckung 10 schnell zu entnehmen und es kann im Störungs- oder Wartungsfall ohne Montageaufwand reagiert werden.

Die Befestigungsbaugruppe, bestehend aus den Bauteilen 5, 6 und 7, dient dem Verstellen des Kappenbefüllgerätes relativ zum Wendelförderer in allen 3 Raumachsen. Um die Magazinbefüllung zu starten, sind zum Teil sicherheitsrelevante Bedingungen zu erfüllen.
1. Der Sensor 11 muss eine Kappe erkennen. Somit ist sichergestellt, dass sich eine Elektrodenkappe direkt vor dem Druckstück 9 befindet.
2. Die beiden Sensoren 18 müssen die Rasthebel des Magazins 15 detektieren, damit sichergestellt wird, dass sich ein Magazin 15 in der dafür vorgesehenen Position am Magazinanschluss 4 befindet.
3. Sind die Bedingungen 1 und 2 erfüllt, muss ein als Startbedingung vorgesehener Schalter, vorzugsweise ausgeführt als Fußschalter, betätigt werden, um einen gewollten Start sicherzustellen.

Sobald die Bedingungen 1-3 erfüllt sind, werden Elektrodenkappen in das Magazin 15 geschoben. Ist das Magazin 15 gefüllt, erreicht der Zylinder 8 seine hintere Endstellung nicht. Dies wird von einem Endlagen-Kontakt am Zylinder 8 erkannt und der Befüllvorgang wird durch die Steuerung abgebrochen.

Soll nun ein weiterer Befüllvorgang gestartet werden, muss der Fußschalter erneut betätigt werden und die Bedingungen 1 und 2 erfüllt sein.

Bei Verwendung von Magazinen 15 mit zwei Schächten werden, um beide Schächte eines Magazines 15 zu befüllen, jeder Schacht des Magazins 15 separat bestückt. Das heißt, der erste Schacht des Magazins wird befüllt, anschließend wird das Magazin um 180° seiner X-Achse gedreht, neu aufgesetzt und der Befüllvorgang erneut gestartet, um den zweiten Schacht zu befüllen.

### Bezugszeichenliste:

- 1: Elektrodenkappendrehkanal
- 2: Führungsschacht
- 3: Magazinbefülleinheit
- 4: Magazinanschluss
- 5: Befestigungsbaugruppe
- 6: Befestigungsbaugruppe
- 7: Befestigungsbaugruppe
- 8: Zylinder
- 9: Druckstück
- 10: Magazinsichtscheibe
- 11: Kappenerkennungssensor
- 12: Raststück
- 13: Halterung
- 14: Schachtsichtscheibe
- 15: Magazin
- 16: Füllstandssensor
- 17: Kugeldruckstück
- 18: Rasthebelsensoren
- 19: Kugeldruckstück

## Patentansprüche

1. Vorrichtung zum Befüllen von Magazinen für Elektrodenkappen für Schweißelektroden, **dadurch gekennzeichnet, dass** sie aus einem Elektrodenkappendrehkanal (1) besteht, welcher an einem Ende mit einem Wendelförderer verbunden ist, an dessen Ende die Elektrodenkappen auf ihrer mit einer Bohrung versehenen Stirnseite stehen und welcher so ausgeführt ist, dass die Elektrodenkappen um 90° ihrer Z-Achse gedreht werden
und welcher mit seinem anderen Ende gegenüber des oberen Endes des Führungsschachtes (2) so angeordnet ist, dass die Vibrationen des Wendelförderers nicht auf das übrige System übertragen werden und die Öffnungen des Elektrodenkappendrehkanals (1) und des Führungsschachtes (2) sich so gegenüber stehen, dass eine Übergabe der Elektrodenkappen sicher erfolgen kann und
dieser Führungsschacht (2) an seinem unteren Ende mit der Magazinbefülleinheit (3) verbunden ist, welche auf ihrer dem zu befüllenden Magazin (15) zugewandten Seite einen Magazinanschluss (4) aufweist, welcher in seiner konstruktiven Ausführung der Aufnahme, mit welcher das Magazin (15) maschinenseitig an einem Kappenwechselgerät fixiert wird, entspricht und
der Magazinanschluss (4) Rasthebelsensoren (18) aufweist, welche den korrekten Sitz des Magazins (15) im Magazinanschluss (4) detektieren und im Kanal des Magazinanschlusses (4) zwei Kugeldruckstücke (19) aufweist, welche in Arbeitsrichtung nacheinander angeordnet sind, und dass
in der Magazinbefülleinheit (3) unterhalb des Führungsschachtes (2) mindestens ein Sensor (11) angeordnet ist, welcher die aus dem Führungsschacht 2 fallenden Elektrodenkappen erkennt und
auf der gegenüberliegenden Seite des Magazinanschlusses (4) ein Zylinder (8) angeordnet und in der Magazinbefülleinheit (3) mittels einer Halterungen (13) befestigt ist und
ein mit der Kolbenstange des Zylinders (8) verbundenes Druckstück (9) zwischen dem Zylinder (8) und der im Kanal der Magazinbefülleinheit (3) befindlichen Elektrodenkappe angeordnet ist und
in Arbeitsrichtung hinter dem Sensor (11) ein Kugeldruckstück (17) so angeordnet ist, dass die aus dem Führungsschacht (2) zugeführten Elektrodenkappen die Position und somit den Detektionsbereich des Sensors (11) nicht unbeabsichtigt verlassen.

2. Vorrichtung nach Anspruch 1, **dadurch gekennzeichnet, dass** sie mittels einer Befestigungsbaugruppe (5, 6 und 7) so befestigt ist, dass ein Verstellen des Kappenbefüllgerätes relativ zum Wendelförderer in allen 3 Raumachsen zu realisieren ist.

3. Vorrichtung nach Anspruch 1, **dadurch gekennzeichnet, dass** der Elektrodenkappendrehkanal (1) fest mit dem Wendelförderer verbunden ist.

4. Vorrichtung nach Anspruch 1, **dadurch gekennzeichnet, dass** der Elektrodenkappendrehkanal (1) dabei so mit dem Führungsschacht (2) verbunden ist, dass die Vibrationen des Wendelförderers nicht auf das übrige System übertragen werden.

5. Vorrichtung nach Anspruch 1, **dadurch gekennzeichnet, dass** der Führungsschacht (2) frontseitig mit einer transparenten Schachtsichtscheibe (14) abgedeckt ist.

6. Vorrichtung nach Anspruch 5, **dadurch gekennzeichnet, dass** die transparente Schachtsichtscheibe (14) eine Acrylglasscheibe ist.

7. Vorrichtung nach Anspruch 1, **dadurch gekennzeichnet, dass**
die frontseitige Abdeckung der Magazinbefülleinheit (3) mittels einer transparenten Abdeckung (10) realisiert ist.

8. Vorrichtung nach Anspruch 7, **dadurch gekennzeichnet, dass** die transparente Abdeckung (14) eine Acrylglasscheibe ist.

9. Vorrichtung nach Anspruch 1, **dadurch gekennzeichnet, dass** zum Arretieren der Abdeckung (10) ein Raststück (12) angeordnet ist.

10. Vorrichtung nach Anspruch 1, **dadurch gekennzeichnet, dass** die frontseitige Öffnung der Magazinbefülleinheit (3) als Wartungsöffnung ausgeführt ist.

11. Vorrichtung nach Anspruch 1, **dadurch gekennzeichnet, dass** die frontseitige Öffnung des Führungsschachtes (2) als Wartungsöffnung ausgeführt ist.

12. Vorrichtung nach Anspruch 1, **dadurch gekennzeichnet, dass** die Sensoren als induktiver Sensoren ausgeführt sind.

13. Vorrichtung nach Anspruch 1, **dadurch gekennzeichnet, dass** der Zylinder (8) als Pneumatikzylinder ausgeführt ist.

14. Vorrichtung nach Anspruch 1, **dadurch gekennzeichnet, dass** das Druckstück (9) an der Kontaktseite mit der Elektrodenkappe eine Ausfräsung entsprechend der Kappenkontur aufweist.

15. Vorrichtung nach Anspruch 1, **dadurch gekennzeichnet, dass** die Verarbeitung der Signale und Ansteuerung der Ventile mittels einer Steuerung realisiert ist, welche im Schaltkasten des Wendelförderers angeordnet ist.

## Claims

1. An apparatus designed to load magazines for electrode caps for welding electrodes, **characterised by** the fact that it consists of an electrode cap rotating conduit (1) which, on one end, is connected to a heliconveyor at the outlet of which the electrode caps will stand on their drilled front side, and which is designed so that the electrode caps are rotated 90° about their Z axis, and which is mounted, with its other end facing the upper end of the guide duct (2) in such a way that the vibrations of the heliconveyor are not transmitted to the other system components, and that the outlet of the electrode cap rotating conduit (1) and the guide duct (2) are facing each other in such a way that the electrode caps are transported in a safe manner, and
that said guide duct (2), with its lower end, is connected to the magazine loading unit (3) which has a magazine connector (4) on the side facing the magazine to be loaded (15) which is designed in such a way that it matches the socket used to fasten the magazine (15) to a cap changer on the machine side, and the magazine connector (4) is equipped with locking lever sensors (18) that detect the correct position of the magazine (15) inside the magazine connector (4), and houses two ball pressure pieces (19) inside the conduit of the magazine connector (4) which are aligned in the direction of operation, and that
the magazine loading unit (3) holds at least one sensor (11) below the guide duct (2) which detects the electrode caps dropping out of the guide duct (2), and that a cylinder (8), present on the side opposite to the magazine connector (4), is mounted inside the magazine loading unit (3) by way of a retainer (13), and that a pressure piece (9), connected to the plunger shaft of the cylinder (8), is located in-between the cylinder (8) and the electrode cap present in the magazine loading unit's conduit (3), and a ball pressure piece (17) is located behind the sensor (11) in the direction of operation in such a way as to prevent the electrode caps transported from the guide duct (2) from accidentally moving out of the position and leaving the detection zone of the sensor (11).

2. An apparatus according to claim 1, **characterised by** the fact that it is held in place by a retainer subassembly (5, 6, 7) in such a way as to allow the cap loading unit to be moved along all three spatial axes in relation to the heliconveyor.

3. An apparatus according to claim 1, **characterised by** the fact that the electrode rotating conduit (1) is firmly attached to the heliconveyor.

4. An apparatus according to claim 1, **characterised by** the fact that the electrode cap rotating conduit (1) is connected with the guide duct (1) in such a way as to prevent the vibrations of the heliconveyor from being transmitted to the other components of the system.

5. An apparatus according to claim 1, **characterised by** the fact that the front side of the guide duct (2) is covered with a transparent duct window (14).

6. An apparatus according to claim 5, **characterised by** the fact that the transparent duct window (14) is made of acrylic glass.

7. An apparatus according to claim 1, **characterised by** the fact that the front cover of the magazine loading unit (3) is designed as a transparent cover (10).

8. An apparatus according to claim 7, **characterised by** the fact that the transparent cover (14) is made of acrylic glass.

9. An apparatus according to claim 1, **characterised by** the fact that the cover (10) is held in place by a locking element (12).

10. An apparatus according to claim 1, **characterised by** the fact that the front opening of the magazine loading unit (3) is designed as a maintenance port.

11. An apparatus according to claim 1, **characterised by** the fact that the front opening of the guide duct (2) is designed as a maintenance port.

12. An apparatus according to claim 1, **characterised by** the fact that the sensors are designed as inductive sensors.

13. An apparatus according to claim 1, **characterised by** the fact that the cylinder (8) is designed as a pneumatic cylinder.

14. An apparatus according to claim 1, **characterised by** the fact that the pressure piece (9) has a milled-out portion on the contact side with the electrode cap that matches the cap contour.

15. An apparatus according to claim 1, **characterised by** the fact that signal processing and valve control is handled by a control unit located inside the switch box of the heliconveyor.

## Revendications

1. Dispositif de remplissage de magasins pour coiffes d'électrodes de soudure, **caractérisé en ce qu'**il est constitué d'un canal de rotation de coiffes d'électrodes (1), lequel est relié par une extrémité à un transporteur hélicoïdal, à l'extrémité duquel les coiffes d'électrodes se situent sur leur face frontale pourvue d'un alésage et lequel est configuré de sorte que les coiffes d'électrodes puissent être amenées en rotation de 90 autour de leur axe Z.
Ce canal est disposé avec son autre extrémité par rapport à l'extrémité supérieure de la goulotte de guidage (2),de telle manière que les vibrations du transporteur hélicoïdal ne soient pas transférées au reste du système et que les ouvertures du canal de rotation de coiffes d'électrodes (1) et de la goulotte de guidage (2) se fassent face, de telle manière qu'un transfert des coiffes d'électrodes puisse avoir lieu de manière fiable et
cette goulotte de guidage (2) est reliée par son extrémité inférieure à l'unité de remplissage de magasin (3), laquelle présente un raccord de magasin (4) sur sa face tournée vers le magasin (15) à remplir. Ce raccord correspond dans son mode de réalisation constructif au logement permettant de fixer le magasin (15), côté machine, à un appareil de changement de coiffe.
Le raccord de magasin (4) comprend des capteurs à levier à cran (18), lesquels détectent le bon positionnement du magasin (15) dans le raccord de magasin (4), et, dans le canal du raccord de magasin (4), deux pièces de pression à billes (19), lesquelles sont disposées l'une derrière l'autre dans le sens du travail, et que dans l'unité de remplissage de magasin (3) au-dessous de la goulotte de guidage (2) au moins un capteur (11) est disposé. Ce capteur détecte les coiffes d'électrodes tombant de la goulotte de guidage 2 et un vérin (8) est disposé sur la face opposée du raccord de magasin (4) et fixé dans l'unité
de remplissage de magasin (3) au moyen d'élements de retenue (13) et
une pièce de pression (9) reliée à la tige de piston du vérin (8) est disposée entre le vérin (8) et la coiffe d'électrode située dans le canal de l'unité de remplissage de magasin (3). Une pièce de pression à billes (17) est disposée dans le sens du travail derrière le capteur (11), de telle sorte que les coiffes d'électrodes amenées hors de la goulotte de guidage (2) ne quittent pas leur position et donc la zone de détection du capteur (11), de manière intempestive.

2. Dispositif selon la revendication 1, **caractérisé en ce qu'**il est fixé au moyen d'un ensemble de fixation (5, 6 et 7), de telle manière qu'un ajustement du dispositif de remplissage de coiffes doive être réalisé par rapport au transporteur hélicoïdal dans les 3 axes spatiaux.

3. Dispositif selon la revendication 1, **caractérisé en ce que** le canal de rotation de coiffes d'électrodes (1) est relié solidement au transporteur hélicoïdal.

4. Dispositif selon la revendication 1, **caractérisé en ce que** le canal de rotation de coiffes d'électrodes (1) est alors relié à la goulotte de guidage (2), de telle manière que les vibrations du transporteur hélicoïdal ne soient pas transférées au reste du système.

5. Dispositif selon la revendication 1, **caractérisé en ce que** la goulotte de guidage (2) est recouverte, en face avant, par une vitre de goulotte transparente (14).

6. Dispositif selon la revendication 5, **caractérisé en ce que** la vitre de goulotte transparente (14) est une vitre acrylique.

7. Dispositif selon la revendication 1, **caractérisé en ce que** le couvercle coté avant de l'unité de remplissage de magasin (3) est réalisé au moyen d'un couvercle transparent (10).

8. Dispositif selon la revendication 7, **caractérisé en ce que** le couvercle transparent (14) est une vitre acrylique.

9. Dispositif selon la revendication 1, **caractérisé en ce qu'**une pièce d'encliquetage (12) est disposée pour arrêter le couvercle (10).

10. Dispositif selon la revendication 1, **caractérisé en ce que** l'ouverture frontale de l'unité de remplissage de magasin (3) est réalisée sous la forme d'un trou d'homme.

11. Dispositif selon la revendication 1, **caractérisé en ce que** l'ouverture frontale de la goulotte de guidage (2) est réalisée sous la forme d'un trou d'homme.

12. Dispositif selon la revendication 1, **caractérisé en ce que** les capteurs sont conçus comme des capteurs inductifs.

13. Dispositif selon la revendication 1, **caractérisé en ce que** le vérin (8) est réalisé sous forme de vérin pneumatique.

14. Dispositif selon la revendication 1, **caractérisé en ce que** la pièce de pression (9) sur le côté de contact avec la coiffe d'électrode présente une découpe correspondant au contour de la coiffe.

15. Dispositif selon la revendication 1, **caractérisé en ce que** le traitement des signaux et l'amorçage des soupapes sont réalisés au moyen d'une commande, laquelle est disposée dans le coffret de commande du transporteur hélicoïdal.
